(19) Europäisches Patentamt

European Patent Office

Office européen des brevets

(11) Veröffentlichungsnummer : **0 471 355 A2**

(12) # EUROPÄISCHE PATENTANMELDUNG

(21) Anmeldenummer : **91113632.3**

(22) Anmeldetag : **14.08.91**

(51) Int. Cl.$^5$ : **B28B 11/00,** B28B 11/08, B28B 3/00, B01D 71/02

(30) Priorität : **17.08.90 DE 4026044**

(43) Veröffentlichungstag der Anmeldung : **19.02.92 Patentblatt 92/08**

(84) Benannte Vertragsstaaten : **CH DE FR GB IT LI NL**

(71) Anmelder : **Pfister Messtechnik GmbH Stätzlinger Strasse 70 W-8900 Augsburg (DE)**

(72) Erfinder : **Häfner, Hans Wilhelm Fichtenweg 15 W-8890 Aichach-Walchshofen (DE)**

(74) Vertreter : **Kahler, Kurt Patentanwalt Dipl.-Ing. Kurt Kahler Gerberstrasse 3 Postfach 1249 W-8948 Mindelheim (DE)**

(54) **Keramische Hohlkörper und Verfahren zu deren Herstellung.**

(57) Keramischer Hohlkörper und Verfahren zu dessen Herstellung, wobei an dem Hohlkörper einstückig eine ggfs. poröse Membran und/oder eine Verbindungsstelle ausgebildet ist.

Fig. 1

Die Erfindung betrifft keramische Hohlkörper und Verfahren zu deren Herstellung.

In den letzten Jahren finden keramische Werkstoffe immer mehr Verwendung auf vielen Gebieten der Technik. Aufgrund ihrer Temperatur-und Formbeständigkeit lassen sich damit Anwendungsgebiete erschließen, für die organische Kunststoffe ungeeignet sind. Problematisch ist allerdings nach wie vor die Herstellung von keramischen Teilen, insbesondere wenn diese eine kompliziertere Form aufweisen, was beispielsweise für Hohlkörper zutrifft. Für die Massenherstellung kommen deshalb nur sehr einfach geformte keramische Teile in Frage, die sich mit üblichen Presswerkzeugen, etwa im Trockenpressverfahren formen lassen und dann gebrannt werden. Für keramische Hohlkörper wird das sogenannte Schlickergußverfahren verwendet, bei dem aufgeschlämmtes Keramikpulver in einer geschlossenen Form mit porösen Wänden dadurch verdichtet wird, daß die Feuchtigkeit durch die Wände entzogen wird. Die dabei erzielbare Dichte und damit die Festigkeit läßt jedoch erheblich zu wünschen übrig, abgesehen von dem umständlichen und energieverbrauchenden Verfahren, das praktisch nur für Einzelfertigung anwendbar ist.

Ein anderes Verfahren zur Herstellung kompliziert geformter Keramikköper insbesondere mit Hohlräumen besteht in der sogenannten Laminiertechnik, bei der eine Anzahl von grünen dünnen Keramikfolien mit entsprechend gewünschten Außenkonturen oder inneren Ausnehmungen aufeinandergelegt und dann gemeinsam gebrannt werden. Hierbei müssen die Innenräume mit entsprechenden Einsätzen ausgefüllt werden, die sich dann beim Brennen verflüchtigen, etwa sublimieren. Es liegt auf der Hand, daß diese Laminiertechnik schwierig zu handhaben ist, insbesondere wenn verhältnismäßig kleine Teile hergestellt werden sollen.

Ein weiteres Problem beim Einsatz keramischer Körper besteht darin, daß sie an dem gewünschten Einsatzpunkt entsprechend fixiert werden müssen. Hierzu sind entweder entsprechend teure Spannvorrichtungen erforderlich oder es muß an den keramischen Körper ein Verbindungsstück, vornehmlich aus Metall angefügt werden, wozu verschiedene spezielle Techniken entwickelt wurden.

Der Erfindung liegt die Aufgabe zugrunde, keramische Hohlkörper anzugeben, die auf einfache Weise herstellbar sind und trotzdem die gewünschten Eigenschaften wie Festigkeit, Reproduzierbarkeit und/oder verhältnismäßig exakte Abmessungen aufweisen.

Ferner sollen ein Verfahren zur Herstellung sowie erfindungsgemäße Einsatzmöglichkeiten derartiger keramischer Hohlkörper angegeben werden.

Das erfindungsgemäße Verfahren ist im Patentanspruch 1 bzw. 5 gekennzeichnet. Keramische Hohlkörper gemäß der Erfindung besitzen die Merkmale des Patentanspruches 7, und erfindungsgemäße Verwendungen sind im Patentanspruch 11 angegeben.

Bevorzugte Weiterbildungen des erfindungsgemäßen Verfahrens, der erfindungsgemäßen keramischen Hohlkörper und ihrer Verwendung sind in den übrigen Ansprüchen gekennzeichnet.

Weitere Vorteile und Merkmale der Erfindung ergeben sich aus den nachfolgenden Beschreibung von Ausführungsbeispielen anhand der Zeichnungen. Es zeigen:

Fig. 1 und 2 keramische Hohlkörper ähnlich den Drucksensoren, wie sie in der nicht vorveröffentlichten EP 0 394 632 beschrieben sind;

Fig. 3 bis 9 nach dem erfindungsgemäßen Verfahren hergestellte keramische Hohlkörper mit erfindungsgemäßen Ausbildungen von Verbindungs- oder Anschlußstellen;

Fig. 10 eine prinzipielle Ausführungsform eines keramischen Körpers mit einfachster Befestigungsmöglichkeit;

Fig. 11 eine alternative Ausbildungsform eines keramischen Hohlköpers mit entsprechend ausgebildeten komplementären Kontaktflächen.

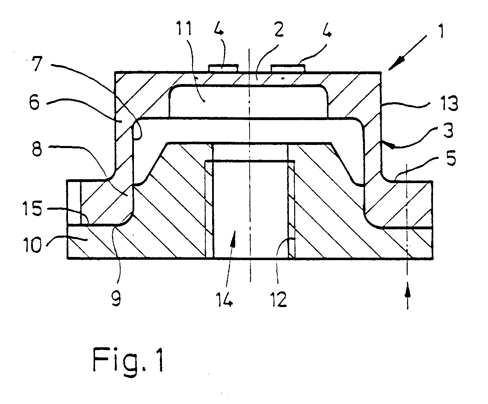

Fig. 1 zeigt ein erstes Ausführungsbeispiel eines erfindungsgemäßen Hohlkörpers 1, der ein im wesentlichen zylindrisches, hutförmiges Element 3 aufweist. Das Element 3 ist einstückig gebildet aus einem relativ steifen Torsionsring 13 von vorzugsweise rechteckigem querschnitt und einer die Öffnung des Ringes 13 an der Oberseite überspannenden Membran 2, wobei der Torsionsring 13 mit einem radialen Befestigungsflansch 5 durch einen flexiblen Übergangsteil 6 verbunden ist. Der Befestigungsflansch 5 dient zur Befestigung des Hohlkörpers 1 an einer beliebigen Einsatzstelle. Auf der Membran 2 sind vorzugsweise mittels Dickfilmtechnik Sensorelemente 4 zur Feststellung geeigneter physikalischer Eigenschaften angebracht, wie dies nachstehend beschrieben wird.

Ein Einsatz 10 mit zylindrischer Außenumfangsfläche 8 sitzt mit enger Passung mit der Innenumfangsfläche 7 im Element 3. Zusätzlich zu diesem Eingriff zwischen der Innenfläche 7 und der Außenfläche 8 kann die Bodenseite des Flansches 5 mit einer sich radial erstreckenden Fläche 9 versehen sein, die in Kontakt mit einer komplementären radialen Fläche 15 des Einsatzes 10 ist. Das Element 3 und der Einsatz 10 sind aus keramischem Material geformt, das unterschiedliche Eigenschaften haben kann, um die Verbindung der beiden Teile zu fördern, beispielsweise einen unterschiedlichen Schrumpfungsgrad. Sie werden in grünem Zustand zusammengesetzt und dann in einem Sinterverfahren zu dem einstückigen Hohlkörper 1 gebrannt, wobei die Kontaktflächen 7/8 und 5/15 fest aneinander haften.

Das Einfügestück 10 bildet dabei zusammen mit dem gegenüberliegenden Membranteil 2 einen Hohlraum 11 aus, in den über einen Durchgang 14, insbesondere ein Anschlußinnengewinde 11a, ein Fluid eingeleitet werden kann, so daß dieses zur relativ dünnen Membran 2 gelangt. Wie ersichtlich, weist das Einfügestück 10 eine einfache, pfropfenartige Form ohne Hinterschneidungen auf, so daß es relativ einfach aus keramischer Masse geformt und anschließend in das aus gleichem oder im wesentlichen gleichen Material bestehende Basisteil 3 eingesetzt werden kann. Durch das Einsetzen wird dann der Hohlraum 11 gebildet, so daß keinerlei Kerneinsätze oder dergleichen für die Bildung des Hohlraumes 11 notwendig sind. Das Einfügestück 10 mit einfacher Außengestalt läßt sich somit sehr genau herstellen, so daß es mit seiner Außenumfangsfläche 8 in die entsprechend geformte Innenfläche 7 des Basisteils 3 in enger Passung eingefügt werden kann.

Nach dem Brennen des so zusammengefügten Hohlkörpers 1, läßt sich dieser an der ringförmigen Einspannfläche 5, wie mit den Pfeilen angedeutet, an eine Meßstelle oder dergleichen anschließen. Erfindungsgemäß kann der Anschluß auch lediglich über eine beliebige Verbindung, wie beispielsweise durch das Anschlußgewinde 11a erfolgen, so daß keine weiteren Befestigungsteile notwendig sind und somit die flanschartige Einspannstelle 5 entfallen kann. Durch die im wesentlichen um 90° versetzten Grenzflächen 7/8 und 9 ergibt sich selbst bei hoher Druckbeaufschlagung des Hohlraumes 11 keine Gefahr, daß sich die Grenzfläche 9 durch Schälbeanspruchung-lösen könnte. Durch die erreichte Verbindungsfestigkeit ist dieser Hohlkörper somit auch für höchste Drücke geeignet.

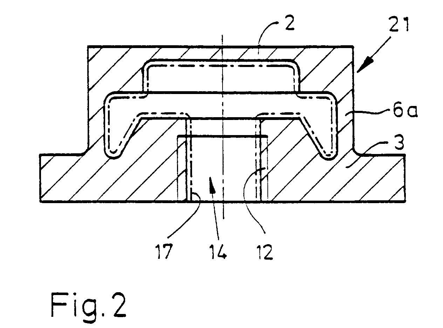

In Fig. 2 ist ein aufgrund der hohen Festigkeit ermöglichter Hohlkörper 21 gezeigt, der neben einem Hohlraum 31 bereits ein bei der Formgebung des Keramikrohteils ausgebildetes Anschlußinnengewinde 12 aufweist, das somit bei dieser Ausführung die Verbindungs- bzw. Anschlußstelle 5 bildet. Zur Bildung des Hohlraumes 31 während des Formvorganges ist ein entsprechend geformter Kerneinsatz 17 (strichpunktiert) aus verdampfbarem oder sublimierbarem Material, z. B. Hexabrombenzol vorgesehen. Über das Anschlußgewinde 12 ist ein direkter Anschluß an eine Leitung besonders einfach möglich. Die beim Einschrauben entstehenden Spannungen werden durch die Zwischenschaltung des Übergangs-Rohrstücks 6a dabei von der Membran 2 ferngehalten. Ein gesondertes Gehäuse zur Umhüllung oder Lagerung des Hohlkörpers 21 ist somit nicht mehr nötig. Diese Ausführung weist besonders wenige Herstellschritte und geringe Herstellkosten auf.

Die in den Fig. 1 und 2 gezeigten keramischen Hohlkörper haben folgende erfindungswesentliche Merkmale:

1. Sowohl die Ausbildung als auch das Herstellungsverfahren läßt sich auf keramische Hohlkörper allgemein anwenden, wesentlich dabei ist das Verbinden von Einzelteilen durch Ineinanderschieben von zueinander komplementären Flächen, um eine entsprechend große Verbindungsfläche und damit eine gute Festigkeit zu erreichen, wobei die Konturen der Einzelteile möglichst einfach gewählt werden, was eine Massenproduktion mit verhältnismäßig kostengünstigen Werkzeugen erlaubt.

2. Als Anschluß oder Verbindungsstelle kommt nicht nur ein Innengewinde in Frage, sondern es können direkt am oder im keramischen Körper alle möglichen Verbindungs- und Anschlußstellen ausgebildet sein. Beispielsweise läßt sich ein Außengewinde beim Strangpressen mittels Gewindewirbel auf den grünen Außenkörper aufbringen. Das gleiche würde für ein Innengewinde gelten, sofern die Durchmesserdimensionen dies zulassen. Ein anderer besonders einfacher Anwendungsfall wäre ein mit einer Membran versehener starrer Basiskörper, dessen Außenumfang mit Gewinde versehen wird.

3. Die Formen der keramischen Hohlkörper beschränken sich nicht auf ein topfförmiges Einzelteil mit Drucksensormembran mit eingesetztem Stopfen, sondern es kommen beliebige andere Formen in Frage, soweit sich deren Einzelteile einfach herstellen lassen (z. B. durch Trockenpressen) mit einer ineinanderschiebbaren Ausbildung mit entsprechend großen komplementären Flächen.

4. Ein derartiger keramischer Hohlkörper ist als Grundkörper nicht nur für einen Drucksensor anwendbar, sondern für beliebige andere Sensoren oder gar andere Verwendungszwecke.

5. Soweit der keramische Hohlkörper mit einer Membran versehen ist, ist diese nicht nur zur Aufnahme von Druckwandlerelementen einsetzbar. Die Membran kann auch verschiedensten anderen Zwecken dienen und dafür entsprechend ausgebildet sein, beispielsweise als poröse Membran.

Für alle diese Merkmale wird einzeln und in Kombination Schutz beansprucht.

Bezüglich der verwendbaren Materialien, vorzugsweise $Al_2O_3$, und die zur Herstellung der einfachen Einzelteile verwendbaren Verfahren sowie der Einzelheiten des Brennvorgangs wird auf das Buch "Technische Keramik, Vulkan Verlag, Essen, Ausgabe 1 (1988)" verwiesen. Nachstehend werden deshalb nur einige wenige Beispiele angegeben, die als besonders bevorzugt angesehen werden könnten.

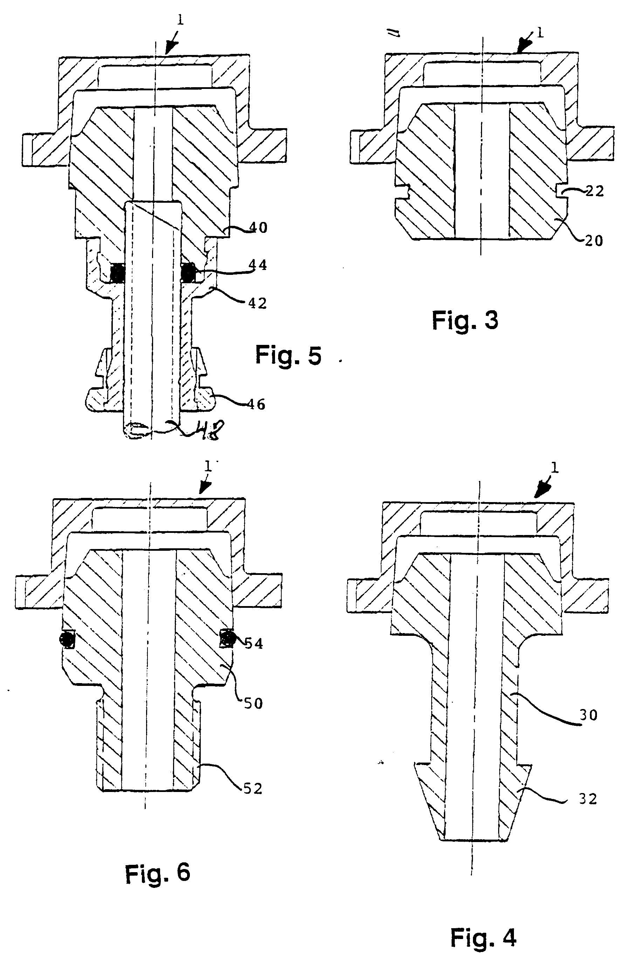

Da die in den Fig. 3 bis 11 veranschaulichten Beispiele aus der Zeichnung für den Fachmann einfach erkenntlich sind, erfolgt nur eine äußerst kurze Beschreibung der Figuren.

So zeigt beispielsweise die Fig. 3 daß für den Stopfen 20 als einfachste Verbindung eine Ringnut 22 ausgeformt sein kann, in die beispielsweise eine mit Klemmbacken versehene Schnellkupplung eingreifen kann.

Fig. 4 zeigt die Ausbildung des Stopfens 30 mit einem Ansatz 32 zum Aufsetzen eines Schlauches.

In Fig. 5 wird ein Stopfen 40 veranschaulicht, in dessen Durchgang ein Rohr 48 mit einer Ringdichtung 44 abgedichtet eingesetzt ist. Das Rohr kann mittels einer Klemmverbindung 42 mit Klemmteil 46 am Verbindungsstück 40 festgelegt sein.

In Fig. 6 ist ein Stopfen 50 gezeigt, der mit Außengewinde 52 versehen ist, auf das eine nicht gezeigte vorzugsweise als Überwurfmutter ausgebildete Mutter unter Abdichtung über eine Ringdichtung 44 angeschraubt werden kann.

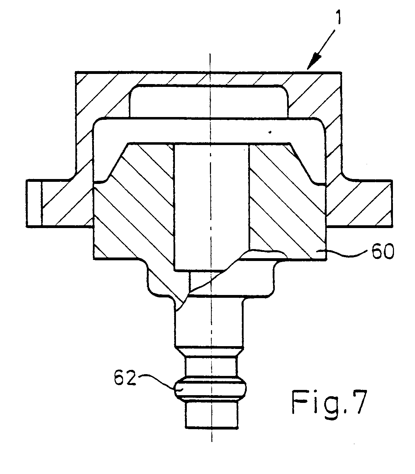

Beim Hohlkörper nach Fig. 7 wird ein Stopfen 60 verwendet mit einem Ansatz, auf dem eine umlaufende Wulst 62 vorgesehen ist, so daß wiederum ein Schlauch angesetzt werden kann oder eine mit Klemmbacken die Wulst hintergreifende Schnellkupplung.

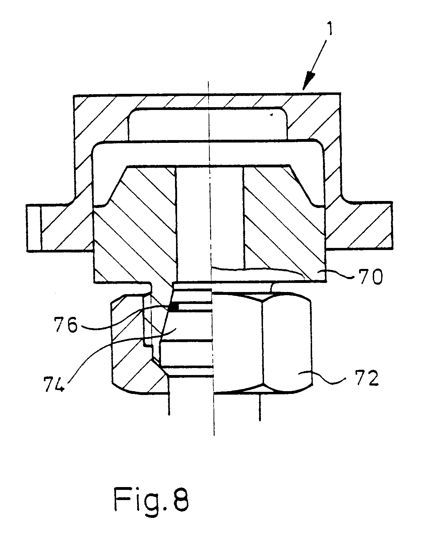

Fig. 8 veranschaulicht einen Hohlkörper mit einem Stopfen 70 mit Außengewinde zum Aufschrauben einer Mutter 72 und einer sich konisch nach hinten erweiternden Öffnung, in die ein mit einer Ringdichtung 76 versehener Konus einsetzbar ist.

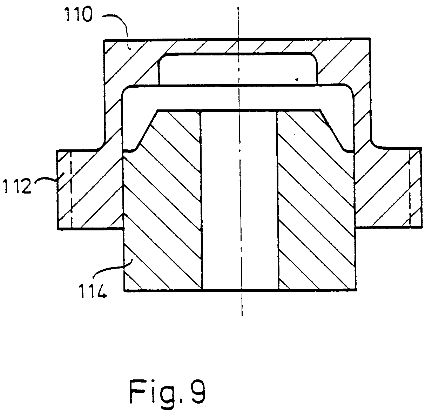

Bei der Ausführungsform nach Fig. 9 kann ein Hohlkörper 110 mit eingesetztem Stopfen 114 mittels eines Außengewindes 112 in einer Rohrleitung bzw. an deren Ende eingeschraubt werden.

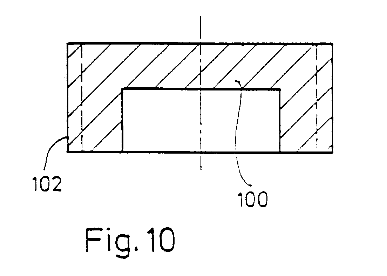

Die schematische Darstellung nach Fig. 10 zeigt im Prinzip die Möglichkeiten der Befestigung eines topfförmigen Hohlkörpers 100 mittels eines Außengewindes 102.

Obwohl der Einfachheit halber lediglich Abwandlungen der Grundform eines Hohlkörpers nach Fig. 1 in den Fig. 3 bis 9 gezeigt sind, beschränkt sich die Erfindung nicht auf derartige Abwandlungen sondern die Einzelteile aus denen sich ein keramischer Hohlkörper zusammensetzt können von beliebiger Form sein, soweit sich daran ineinander schiebbare zueinander komplementäre Kontakflächen in einfacher Weise ausbilden lassen.

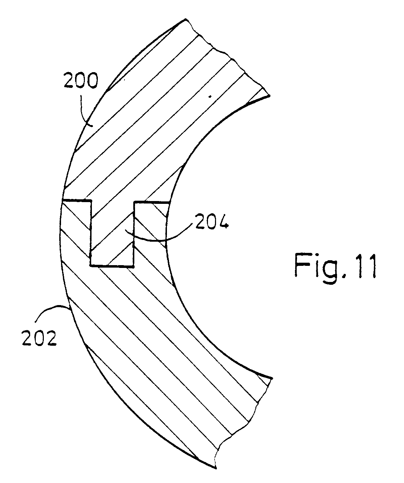

Lediglich ganz beispielhaft wird noch auf Fig. 11 verwiesen, die ein Beispiel eines möglichen Verbandes zweier gekrümmter Einzelteile etwa zweier Halbkugeln veranschaulichen soll. Die obere Halbkugel 200 besitzt einen zylindrischen Ringansatz 204, der in eine entsprechende Nut der unteren Halbkugel 202 einsetzbar ist. Soweit es auf die innere Form nicht ankommt, kann dafür an der Innenseite ein einfacher Verband verwendet werden.

In den Ausführungsbeispielen sind im wesentlichen zueinander komplementäre zylindrische Flächen angegeben. Es ist jedoch auch eine - vorzugsweise geringfügig - konische Ausführung, ggf. auch mit gekrümmten Mantel möglich. Durch die konische Ausführung erhält man beim Einfügen ein gewisses Anpressen der zueinander komplementären Flächen. Andererseits kommen auch abgestufte komplementäre Flächen in Frage.

Es sei darauf hingewiesen, daß aufgrund der Anformung einer Verbindungs- und Anschlußstelle direkt am keramischen Körper, das nach wie vor kritische Anfügen eines eigenen Anschlußelementes etwa aus Metall wegfällt.

Wie zuvor erwähnt, können Membranen, die bei bevorzugten Ausführungsbeispielen an dem keramischen Hohlkörper angeformt sind, ganz verschiedene Ausbildung entsprechend den gewünschten Einsatzmöglichkeiten haben. Eine bevorzugte Anwendungsmöglichkeit ist der Einsatz bei der Gastrennung als poröse Membranen, da diese Temperaturen von mehreren 100°C aushalten. Es können damit leichte Moleküle aus Prozessgasen drucklos oder bei geringen Drücken und bei hohen Temperaturen abgetrennt werden. Ein mittlerer Porenradius kann dabei beispielsweise zwischen 15 und 30 Angström liegen, vgl. Zeitschrift Chem.-Ing.-Tech. 56 (1984) Nr. 9 S. 1720. Eine andere Anwendungsmöglichkeit ist als sauerstoffionenleitende Keramikmembran bei pH-Sensoren (SCIENCE, vol. 207, 14. März 1980, Seite 1200-1202). Weitere bevorzugte Anwendungsmöglichkeiten von Sensoren, die als keramische Hohlkörper gemäß der Erfindung ausgebildet sind oder diese verwenden, sind Temperatursensoren, Gas- und Feuchtigkeitssensoren zur Feststellung der Adsorption und Desorption von Gasen aufgrund von Änderungen der elektrischen Leitfähigkeit und Infrarotsensoren, die den pyroelektrischen Effekt verwenden (KERAMIK BULLETIN, vol. 64 No. 12 (1985), Seiten 1581-1585). Eine andere Anwendungsmöglichkeit ist ein Wärmeleitfähigkeitssensor (Technisches Messen, Jahrgang 51, 1984, Heft 11, Seiten 385-393). Aus den vorstehenden Verwendungsmöglichkeiten ist ersichtlich, daß insbesondere die Hochtemperaturmeßtechnik den Einsatz von keramisch aufgebauten Sensoren benötigt. Hierbei erhalten die porösen Membranen immer weitere Bedeutung bei der Gas- und Flüssigkeitstrennung, wobei diese Fluide durch die poröse Membran als semipermeable Wand beispielsweise unter dem osmotischen Druck hindurch diffundieren können. Durch entsprechende Wahl der Dicke und Porengröße kann dann eine Anpassung an die gewünschten Verhältnisse in weiten Grenzen erfolgen. Als wichtiges Beispiel sei in diesem Zusammenhang auf die Umweltproblematik und die Abgastechnik insbesondere auch bei Kraftfahrzeugen hingewiesen.

Weitere spezielle Anwendungen von Membranen sind dampfdurchlässige Membranen für die Alkoholtrennung, Gastrennmembranen für die Wasserstoffabtrennung und Ultrafiltrationsmembranen für eine Hochtemperatursterilisation. Membranen finden auch Anwendung für verschiedene biotechnologische Vorgänge wie beispielsweise in einem Alkoholfermentationsprozeß wo Ultrafiltrationsmembranen zur Gewinnung von Enzymen verwendet werden.

Zusammenfassend kann somit festgestellt werden, daß es aufgrund der erfindungswesentlichen Überlegungen möglich ist, auf erheblich vereinfachte Weise keramische Hohlkörper mit zufriedenstellender Festigkeit herzustellen, die sehr vielfältige Verwendungsmöglichkeiten bieten, wobei ein spezielles Gebiet die Verwendung derartiger keramischer Hohlkörper mit daran ausgebildeter Membran der Bereich der Sensortechnik und Gas-/ Flüssigkeitsprozeßtechnik ist.

**Patentansprüche**

1. Verfahren zum Herstellen von keramischen Membranhohlkörpern (1), gekennzeichnet durch Formen von zumindest zwei grünen Einzelteilen (3, 10; 110, 114; 200, 202), wobei in mindestens einem Einzelteil (3) ein Teil des Hohlraums (11) ausgebildet wird unter gleichzeitigem Ausbilden von Kontaktflächen mit zueinander annähernd komplementärer Form an dem einen und dem anderen Einzelteil, wobei die Kontaktflächen parallel zur gleichen Achse verlaufen, Ineinanderschieben der beiden Einzelteile in Richtung der genannten Achse zur Herstellung eines großflächigen Kontakts zwischen den an jedem der beiden Einzelteile ausgebildeten Flächen und Brennen des zusammengefügten Körpers zu einem Stück, wobei an mindestens einem der Einzelteile (10; 110) bei dessen Formen im ungebrannten Zustand eine Verbindungsstelle (z. B. 12), insbesondere ein Anschluß ausgebildet wird.

2. Verfahren nach Anspruch 1, dadurch gekennzeichnet, daß die ungebrannten Einzelteile durch Feuchtpressen, Trockenpressen, isostatisches Pressen, Strangpressen, Schlicker- oder Spritzguß geformt werden.

3. Verfahren nach Anspruch 1 oder 2, dadurch gekennzeichnet, daß die Membran als poröse Membran ausgebildet wird.

4. Verfahren nach einem der Ansprüche 1 bis 3, dadurch gekennzeichnet, daß die zueinander komplementären Kontaktflächen (7/8, 9/15) zwischen den Einzelteilen (3, 10) zylindrisch, geradlinig konisch, gekrümmt konisch und/oder abgestuft sind.

5. Verfahren zur Herstellung eines keramischen Hohlkörpers (21), dadurch gekennzeichnet, daß in eine den Außenkonturen des Hohlkörpers (21) entsprechende Form ein der Form des Hohlraums entsprechender, entfernbarer Kerneinsatz (17) eingebracht, Keramikpulver in die Form eingefüllt, dieses gepreßt und gebrannt wird, wonach der Kerneinsatz entfernt wird, wobei beim Formen am Hohlkörper eine ggfs. poröse Membran (2) und/oder eine Verbindungsstelle (z. B. 12), insbesondere ein Anschluß ausgebildet wird.

6. Verfahren nach einem der Ansprüche 1 bis 5, dadurch gekennzeichnet, daß der Hohlkörper (1; 21) als Sensorgrundkörper ausgebildet und vorzugsweise nach dem Brennen mit Sensorelementen (4) versehen wird.

7. Keramischer Hohlkörper (1; 21), dadurch gekennzeichnet, daß an ihm einstückig eine ggfs. poröse Membran (2) und/oder eine Verbindungsstelle (z. B. 12) ausgebildet ist.

8. Hohlkörper nach Anspruch 7, dadurch gekennzeichnet, daß der Anschluß ein Innen- bzw. Außengewinde (12; 52; 102; 112) ist.

9. Hohlkörper nach Anspruch 7, dadurch gekennzeichnet, daß der Anschluß als Schlauchanschluß (32) oder als Bajonettverschluß ausgebildet ist.

10. Hohlkörper nach Anspruch 7 oder 9, dadurch gekennzeichnet, daß der Anschluß eine konische Öffnung zum Einsetzen eines komplementär dazu passenden Verbindungsstücks (74), gegebenenfalls mit Dichtung (76) und ein Außengewinde zum Aufschrauben einer Überwurfmutter (72) aufweist, wobei der Anschluß unter Einfügen von mindestens einer stirnseitigen oder umfangsmäßig angeordneten Dichtung (76) erfolgen kann.

11. Verwendung eines keramischen Hohlkörpers nach einem der Ansprüche 7 bis 10 zur Gas- und/oder Flüssigkeitstrennung insbesondere in der Kraftfahrzeugabgastechnik, oder in der Biotechnologie, insbesondere als pH Sensor, Temperatursensor, Feuchtigkeitssensor oder Wärmeleitfähigkeitssensor.

Fig. 1

Fig.2

Fig. 5

Fig. 3

Fig. 6

Fig. 4

1

60

62

Fig.7

Fig. 8

Fig. 9

Fig. 10

102

100

Fig. 11